# FASCICULE DE BREVET EUROPEEN

(11) **EP 0 480 792 B1**
(45) Date de publication et mention de la délivrance du brevet: **15.11.1995**
(21) Numéro de dépôt: 91402579.6
(22) Date de dépôt: 26.09.1991
(51) Int. Cl.: G21C 3/10, B23K 26/12, B23K 26/00

(54) **Equipement de perçage et/ou d'obturation au laser du trou de queusot d'un crayon combustible**
Vorrichtung zum Laserbohren und/oder Verschliessen des Loches am Brennstabrohr.
Equipment for laser drilling and/or sealing fuel rod exhaust tip hole

(30) Priorité: 08.10.1990 FR 9012362
(43) Date de publication de la demande: 15.04.1992
(73) Titulaire: SOCIETE FRANCO-BELGE DE FABRICATION DE COMBUSTIBLES FBFC, F-92087 Paris La Défense (FR)
(72) Inventeur: Duthoo,Dominique, F-26100 Romans (FR)
(74) Mandataire: Jacobson, Claude

(56) Documents cités:
- FR-A- 2 305 827
- US-A- 4 727 237
- PATENT ABSTRACTS OF JAPAN, vol. 3, no. 118 (C-60) 4 Octobre 1979 & JP-A-54 099 750

## Description

La présente invention est relative à un équipement de perçage et/ou d'obturation au laser du trou de queusot d'un crayon combustible, du type indiqué dans le préambule de la revendication 1.

Les crayons combustibles utilisés dans les réacteurs nucléaires sont constitués d'un tube de gainage en alliage de zirconium aux extrémités duquel sont emmanchés à force, puis soudés, des bouchons du même matériau, destinés à le fermer hermétiquement.

Les crayons contiennent un empilage de pastilles combustibles maintenues en appui contre l'un des bouchons (dit bouchon inférieur) à l'aide d'un ressort comprimé entre la colonne fissile et le bouchon opposé (bouchon supérieur). Le bouchon supérieur comporte un orifice de petit diamètre, dit "trou de queusot", permettant de pressuriser le crayon combustible à l'hélium avant de boucher ce trou par soudage, cette opération étant souvent appelée "queusotage".

La longueur d'un crayon combustible est de l'ordre de 4 mètres et son diamètre d'environ 10 mm pour une épaisseur d'environ 0,6 mm.

Les soudures de trou de queusot sont réalisées en atmosphère d'hélium hyperbare et consistent à effondrer les bords d'un orifice de petit diamètre (typiquement inférieur à 0,8 mm). Leur pénétration doit être supérieure ou égale à l'épaisseur de la gaine avec un niveau de garantie important.

Le FR-A-2 305 827 propose d'effectuer le perçage et l'obturation de ce trou au moyen d'un faisceau laser avec un équipement du type précité, mais sans décrire de technologie concrète.

L'invention a pour but de fournir un équipement permettant de percer et/ou d'obturer de façon automatisée les trous de queusot avec une faible consommation d'hélium.

A cet effet, l'invention a pour objet un équipement de perçage et/ou d'obturation au laser du trou de queusot d'un crayon combustible, du type précité, caractérisé par la partie caractérisante de la revendication 1.

D'autres caractéristiques sont décrites dans les sous-revendications.

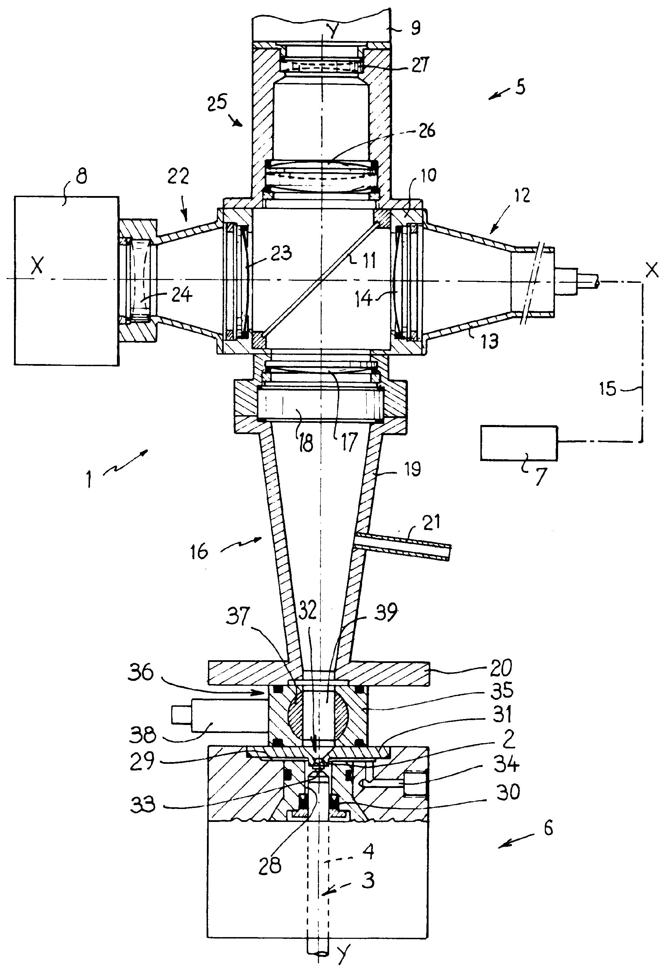

Un exemple de réalisation de l'invention va maintenant être décrit en regard du dessin annexé, dont la Figure unique représente en coupe longitudinale un équipement d'obturation de trou de queusot conforme à l'invention.

L'équipement 1 représenté au dessin est destiné à obturer au laser le trou de queusot (non visible sur le dessin) ménagé axialement dans un bouchon tronconique 2 d'une série de crayons combustibles 3. Les crayons comprennent extérieurement une gaine 4 à chaque extrémité de laquelle a été préalablement emmanché et soudé un bouchon. L'équipement 1 comprend essentiellement un boîtier 5, une enceinte 6, un générateur laser YAG pulsé 7, un détecteur d'énergie ou de puissance 8, et une caméra 9.

Le boîtier 5 comprend un corps central parallélépipédique 10 dans lequel est monté un miroir de renvoi 11 incliné à 45°. Ce boîtier est ouvert sur quatre faces successives, d'où partent quatre branches:
- une branche d'entrée 12 d'axe X-X supposé horizontal, comprenant un support tubulaire 13 et une lentille collimatrice 14 adjacente au corps 10. Une fibre optique 15 partant du générateur laser 7 se termine dans le support 13, où son extrémité est positionnée suivant l'axe X-X;
- une branche de sortie 16 d'axe Y-Y supposé vertical comprenant successivement, à partir du corps 10, une lentille de focalisation 17, un hublot 18 et une manchette 19 dont l'ouverture d'extrémité comporte une bride de fixation 20. Le hublot 18 est monté à joint étanche entre deux brides de la branche 16 assemblées l'une à l'autre, et une conduite 21 d'amenée d'hélium sous environ 30 bars débouche dans la manchette 19, juste au-dessous de ce hublot;
- une branche 22 de contrôle de faisceau laser, d'axe X-X, située à l'opposé de la branche 12. Cette branche 22 comporte des lentilles optiques convergente 23 et divergente 24, permettant d'adapter le diamètre du faisceau à la dimension du détecteur 8, et ce dernier est fixé à l'extrémité de la branche 22; et
- une branche 25 de contrôle visuel, d'axe Y-Y, située à l'opposé de la branche 16. Cette branche 25 comporte des lentilles optiques convergente 26 et divergente 27, permettant d'adapter le diamètre de la lentille de focalisation du faisceau à l'objectif de la caméra 9, et cette dernière est fixée à l'extrémité de la branche 25.

L'enceinte 6, de même axe général Y-Y que la manchette 19, est disposée sous le boîtier 5. Elle comporte un passage cylindrique 28 débouchant dans un lamage étagé 29 ouvert vers le haut. Le passage 28 est muni, à une petite distance de ce lamage, d'un joint d'étanchéité annulaire 30 du type à lèvres.

Une plaque d'appui 31 est fixée de façon étanche dans la partie extérieure, de plus grand diamètre, du lamage 29. Cette plaque comporte en son centre un trou 32 de forme convergente-divergente qui constitue la fenêtre de l'enceinte. La partie interne 33 de cette fenêtre forme un siège conjugué du bouchon 2 des crayons combustibles comportant le trou de queusot central à obturer.

Un conduit 34 de l'enceinte 6 débouchant dans la partie interne du lamage 29 peut, au moyen d'un distributeur non représenté, être relié sélectivement à une source d'hélium sous une pression légèrement supérieure à la pression atmosphérique, à une pompe à vide ou à l'air libre, ou encore être fermé.

La bride 20 de la manchette 19 est fixée de manière étanche sur l'enceinte 6 par l'intermédiaire du corps parallélépipédique 35 d'une électrovanne d'arrêt 36 à boisseau sphérique 37 et à tige d'actionnement rotative 38.

En service, la vanne 36 étant fermée et en l'absence de tout crayon, l'enceinte 6 est soumise à un balayage d'hélium basse pression via le conduit 34, le lamage 29 et le passage 28. Un crayon combustible 3 est introduit dans le passage 28, à travers le joint 30, jusqu'à appui de son bouchon 2 sur le siège 33, puis maintenu par des moyens de serrage (non représentés) dont est munie l'enceinte. Le conduit 34 est relié à la pompe à vide pour évacuer l'air contenu dans le crayon 3, puis fermé, cette phase d'évacuation étant d'ailleurs optionnelle.

La vanne 36 est ouverte, ce qui emplit le crayon d'hélium sous environ 30 bars et offre un passage pour le faisceau laser, à travers le passage cylindrique 39 du boisseau, jusqu'au trou de queusot. La fermeture du trou de queusot est alors effectuée au moyen du faisceau laser pulsé, lequel est véhiculé par la fibre optique 15, collimaté par la lentille 14, réfléchi par le miroir 11 et focalisé par la lentille 17 sur le trou à boucher. Puis la vanne 36 est refermée, le conduit 34 est mis à l'atmosphère, le crayon 3 est évacué et le balayage de l'enceinte à l'hélium par le circuit basse pression est rétabli.

Le miroir 11 est un miroir dichroïque qui réfléchit la majorité (par exemple 97%) du faisceau laser incident (λ = 1,06 micron) et en laisse passer une petite fraction vers le détecteur 8. De plus, ce miroir est transparent à la lumière visible, ce qui permet à la caméra 9 de surveiller par visée reflex le bouchon 2 du crayon 3 à travers les lentilles 27, 26 et 17, le miroir 11, le hublot 18 et la fenêtre 32 lorsque la vanne 36 est ouverte.

Le détecteur 8 permet de surveiller le faisceau laser, et par exemple de déclencher une alarme en cas de détérioration d'un composant optique ou d'un dysfonctionnement du générateur laser. La caméra 9 permet de vérifier le positionnement du crayon dans l'enceinte 6 et, éventuellement, de déclencher également une alarme.

La rigidité de tout l'équipement, constitué d'éléments métalliques fixés rigidement les uns sur les autres et comprenant des éléments optiques fixés rigidement dans le boîtier 5, assure une excellente focalisation du faisceau, indéréglable, à l'emplacement de la soudure et une qualité élevée et bien reproductible des soudures. L'équipement est cependant démontable et permet une maintenance aisée, et notamment un démontage et un entretien faciles du hublot 18.

Grâce à l'agencement décrit comportant la vanne 36 entre le boîtier et l'enceinte, le volume mort d'hélium sous pression entourant le bouchon 2 et la partie adjacente du crayon est réduit au strict minimum, et il en est de même de la consommation d'hélium de l'installation.

Comme on le comprend, le même équipement peut, si on le désire, servir également à percer le trou de queusot de chaque crayon combustible.

Il est à noter que, en variante, l'électrovanne à boisseau 36 peut être remplacée par tout autre type d'électrovanne qui, en position d'ouverture, offre un passage suffisant au faisceau laser focalisé.

## Revendications

1. Equipement de perçage et/ou d'obturation au laser du trou de queusot d'un crayon combustible (3), du type comprenant un ensemble de focalisation d'un faisceau laser, une enceinte (6) qui comporte une fenêtre (32) d'entrée du faisceau laser et un passage (28) d'introduction et de positionnement d'un crayon combustible en regard de la fenêtre, ce passage étant muni d'un joint d'étanchéité (30), et des moyens de pressurisation de l'enceinte avec un gaz sous pression, caractérisé en ce que l'ensemble de focalisation comprend un boîtier (5) comportant une branche de sortie (16) dans laquelle débouche une conduite (21) de gaz sous pression, en ce que la fenêtre (32) de l'enceinte est une ouverture, et en ce qu'une vanne d'arrêt (36) est interposée de façon étanche entre une bride d'extrémité (20) de la branche de sortie (16) du boîtier et la fenêtre (32) de l'enceinte.

2. Equipement suivant le revendication 1, caractérisé en ce que, le trou de queusot du crayon (3) étant ménagé axialement, la fenêtre (32) forme un siège d'appui (33) pour le crayon.

3. Equipement suivant le revendication 1 ou 2, caractérisé en ce que l'espace de l'enceinte (6) situé entre la fenêtre (32) et le joint d'étanchéité (30) peut être relié à une source de gaz de balayage ou à l'atmosphère, ou éventuellement à une pompe à vide, via un conduit (34) ménagé dans la paroi de l'enceinte (6).

4. Equipement suivant l'une quelconque des revendications 1 à 3, caractérisé en ce que la vanne (36) est du type à boisseau (37).

## Patentansprüche

1. Vorrichtung zum Bohren und/oder Verschließen des Pumplochs eines Brennelements (3) mit Laser, bestehend aus einer Fokussierungseinheit für einen Laserstrahl, aus einem Behälter (6), der eine Eintrittsöffnung (32) für den Laserstrahl und einen Durchlaß (28) zum Einführen und Positionieren eines Brennelements gegenüber der Öffnung aufweist, wobei dieser Durchlaß mit einer Dichtung (30) versehen ist, sowie aus Mitteln zum Unter-Druck-Setzen des Behälters mit einem Druckgas,
dadurch gekennzeichnet, daß die Fokussierungseinheit aus einem Gehäuse (5) besteht, das einen Ausgangsflügel (16) aufweist, in dem eine Leitung (21) für Druckgas mündet, daß die Öffnung (32) des Behälters ein Loch ist, und daß ein Absperrventil (36) dicht zwischen einem Endflansch (20) des Ausgangsflügels (16) des Gehäuses und der Öffnung (32) des Behälters angeordnet ist.

2. Vorrichtung nach Anspruch 1,
dadurch gekennzeichnet, daß, da das Pumploch des Brennelements (3) in Achsrichtung ausgeführt ist, die Öffnung (32) einen Anlagesitz (33) für das Brennelement bildet.

3. Vorrichtung nach Anspruch 1 oder 2,
dadurch gekennzeichnet, daß der Raum des Behälters (6) zwischen der Öffnung (32) und der Dichtung (30) über eine Leitung (34), die in der Wand des Behälters (6) vorgesehen ist, mit einer Spülgasquelle oder mit der Atmosphäre oder ggf. mit einer Vakuumpumpe verbunden werden kann.

4. Vorrichtung nach einem der Ansprüche 1 bis 3,
dadurch gekennzeichnet, daß das Ventil (36) ein Ventil mit Hahnküken (37) ist.

## Claims

1. Apparatus for drilling and/or sealing by laser an exhaust hole of a fuel rod (3) of the type comprising a laser beam focussing assembly, an enclosure (6) having a laser beam introduction window (32) and a passage (28) for introducing and positioning a fuel rod facing the window, said passage being equipped with a sealing joint (30) and means for pressurizing the enclosure with a pressurized gas, characterized in that the focussing assembly incorporates a casing (5) having an outlet branch (16) into which issues a pressurized gas pipe (21), that the window (32) of the enclosure is an opening and that a stop valve (36) is interposed in tight manner between an end flange (20) of the outlet branch (16) of the casing and the window (32) of the enclosure.

2. Apparatus according to claim 1, characterized in that with the exhaust hole of the rod (3) positioned axially, the window (32) forms a bearing seat (33) for the rod.

3. Apparatus according to claim 1 or 2, characterized in that the space of the enclosure (6) located between the window (32) and the sealing joint (30) can be connected to a scavenging gas source or to atmosphere, or optionally to a vacuum pump, via a pipe (34) in the wall of the enclosure (6).

4. Apparatus according to any one of the claims 1 to 3, characterized in that the valve (36) has a spherical member (37).
